(19) **Europäisches Patentamt**

**European Patent Office**

**Office européen des brevets**

(11) **EP 1 168 132 B1**

(12) **FASCICULE DE BREVET EUROPEEN**

(45) Date de publication et mention
de la délivrance du brevet:
**16.11.2005 Bulletin 2005/46**

(51) Int Cl.⁷: **G05D 3/12**, G05D 3/14

(21) Numéro de dépôt: **01401592.9**

(22) Date de dépôt: **18.06.2001**

(54) **Dispositif de servo-commande de position, notamment pour actionneur de commande de vol d'aéronef**

Positionsservosteuerungsvorrichtung, insbesondere für den Flugsteuerstellantrieb eines Flugzeugs

Position servo-control device, in particular for aircraft flight control actuator

(84) Etats contractants désignés:
**DE ES FR GB IT**

(30) Priorité: **19.06.2000 FR 0007794**

(43) Date de publication de la demande:
**02.01.2002 Bulletin 2002/01**

(73) Titulaire: **Goodrich Actuation Systems SAS
78530 Buc (FR)**

(72) Inventeurs:
• **Gouhier, Corinne
95170 Deuil la Barre (FR)**
• **Silvestro, Geneviève
95610 Eragny (FR)**

(74) Mandataire: **Callon de Lamarck, Jean-Robert et al
Cabinet Régimbeau
20, rue de Chazelles
75847 Paris cedex 17 (FR)**

(56) Documents cités:
**EP-A- 0 332 200          DE-A- 3 430 288
US-A- 5 710 497**

EP 1 168 132 B1

## Description

La présente invention est relative à un dispositif de servocommande de position, notamment pour actionneur de commande de vol d'aéronef.

Classiquement, un dispositif de servocommande de position pour actionneur de commande de vol comporte une boucle d'asservissement et un système servocommandé disposé dans ladite boucle, celle-ci intégrant des moyens de compensation qui sont disposés dans ladite boucle en amont du système servocommandé et qui assurent notamment un filtrage aux fréquences de résonance des mouvements de la ou des pièces mécaniques actionnées par ledit système.

Un problème rencontré avec un tel dispositif de servocommande tient en ce qu'il ne prend pas en compte les efforts qui s'exercent sur les pièces mécaniques actionnées.

Or, ces efforts peuvent être particulièrement importants.

On souhaite par conséquent, pour limiter la fatigue des pièces mécaniques et accroître leur temps de vie, pouvoir contrôler ces efforts.

Un but de l'invention est de proposer un dispositif de servocommande de position en ce sens qui soit particulièrement simple et fiable.

A cet effet, l'invention propose un dispositif de servocommande de position comportant au moins une boucle d'asservissement et un système servocommandé disposé dans ladite boucle, ladite boucle comportant des moyens de compensation qui comportent des moyens pour mettre en oeuvre un filtrage à une ou des fréquences de résonance de déplacement pour la (ou les) pièce(s) mécanique(s) commandée(s) en position par le système servocommandé, caractérisé en ce qu'il comporte des moyens de compensation qui mettent en oeuvre un filtrage à une ou des fréquences qui est ou sont des fréquences de résonance pour les efforts exercés sur le système servocommandé et/ou sur la ou les pièces mécaniques qu'il commande.

On notera qu'un tel dispositif présente l'avantage de permettre une compensation d'effort sans qu'il ne soit nécessaire de prévoir des moyens de commande complémentaires et en particulier sans qu'il ne soit nécessaire de prévoir des capteurs d'effort.

Elle est donc particulièrement avantageuse en termes de coûts, d'encombrement et de poids pour les dispositifs de commande.

L'invention concerne également un dispositif de servocommande de position comportant plusieurs boucles d'asservissement en parallèle, chaque boucle d'asservissement comprenant un système servocommandé et des moyens de compensation qui comportent des moyens pour mettre en oeuvre un filtrage à une ou des fréquences de résonance de déplacement pour la (ou les) pièce(s) mécanique(s) commandée(s) en position, caractérisé en ce que chaque boucle comporte des moyens de compensation qui mettent en oeuvre un filtrage à une ou des fréquences qui est ou sont des fréquences de résonance pour les efforts exercés sur le système servocommandé et/ou sur la ou les pièces mécaniques commandées en position.

Avantageusement, notamment, il comporte pour chacune des boucles des moyens permettant d'estimer l'effort exercé sur les moyens mécaniques en fonction du signal et il comporte également des moyens pour déduire des différentes estimations d'effort ainsi obtenues une estimation d'effort moyen, ainsi que des moyens qui, pour chacune des boucles, corrigent une entrée d'un module de compensation mettant en oeuvre un filtrage à une ou des fréquences qui est ou sont des fréquences de résonance pour les efforts exercés sur la (ou les) pièce(s) mécaniques commandées en position, cette correction étant fonction d'un signal d'erreur caractérisant la différence entre l'estimation d'effort de la boucle et l'estimation d'effort moyen.

Les dispositifs proposés par l'invention trouvent en particulier avantageusement application en aéronautique, notamment pour les actionneurs de commande de vol d'aéronef.

Ils peuvent également avantageusement trouver application dans le cas de servocommandes de vérins de charge de bancs d'essais.

D'autres caractéristiques et avantages de l'invention ressortiront encore de la description qui suit, laquelle est purement illustrative et non limitative et qui doit être lue en regard des dessins annexés sur lesquels :

- la figure 1 est une représentation schématique illustrant un dispositif conforme à un mode de réalisation possible de l'invention ;
- la figure 2 est une représentation schématique illustrant un dispositif conforme à un autre mode de réalisation possible de l'invention.

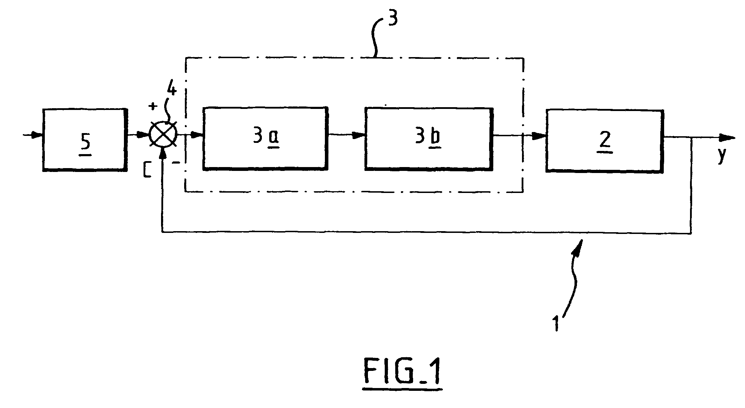

Le dispositif représenté sur la figure 1 comporte une boucle d'asservissement 1, un système servocommandé 2, ainsi que des moyens de compensation 3 qui sont disposés en amont de ces moyens de convergence.

Les moyens de soustraction qui en entrée de la boucle reçoivent un signal de commande C et lui soustraient le signal "y" de commande de position en sortie de la boucle pour générer un signal d'erreur ont été référencés par 4.

On a également représenté sur cette figure 1 un filtre 5 qui reçoit en entrée un signal de commande non filtré et qui fournit en sortie le signal C.

Les moyens de compensation 3 mettent notamment en oeuvre un filtrage à des fréquences qui sont des fréquences de résonance pour les mouvements des différentes parties du système servocommandé (module 3a de compensation de position).

Ils mettent également en oeuvre un filtrage à des fréquences qui sont des fréquences de résonance pour les efforts exercés sur le système servocommandé et/ou les pièces mécaniques actionnées par ledit système (module 3b de compensation d'effort).

Dans l'exemple illustré sur la figure 1, ces deux filtrages sont réalisés dans deux modules successifs 3a, 3b correspondant à deux fonctions de filtrage centrées sur des fréquences différentes.

En variante, ils peuvent être réalisés dans un seul et même module.

Bien entendu, le dispositif représenté sur la figure 1 suppose la connaissance à priori du comportement en effort du système servocommandé et des pièces mécaniques qu'il actionne.

Cette connaissance a priori est obtenue en testant le comportement en effort du système servocommandé et des pièces mécaniques.

Dans le cas de commande de vol d'aéronef, et notamment de servocommande hydraulique, ou encore de vérin de charge pour banc de test de commande de vol, cette gamme de fréquence va de 0 à la fréquence d'échantillonnage du calculateur, laquelle est généralement de 100 à 200 Hz.

Dans cette gamme, la gamme de fréquences de 0 à 12-15 Hz est la plus sensible.

En l'absence d'une compensation d'effort dans la boucle d'asservissement, les efforts aux fréquences de résonance d'effort peuvent aller au delà de la charge d'arrêt du vérin ou de la servocommande, laquelle charge d'arrêt peut être de plusieurs dizaines de tonnes.

Le filtrage de comportement en effort mis en oeuvre par les moyens de compensation 3 peut être de différents types : filtre à plusieurs trous de coupure, filtres passe-bas, etc..

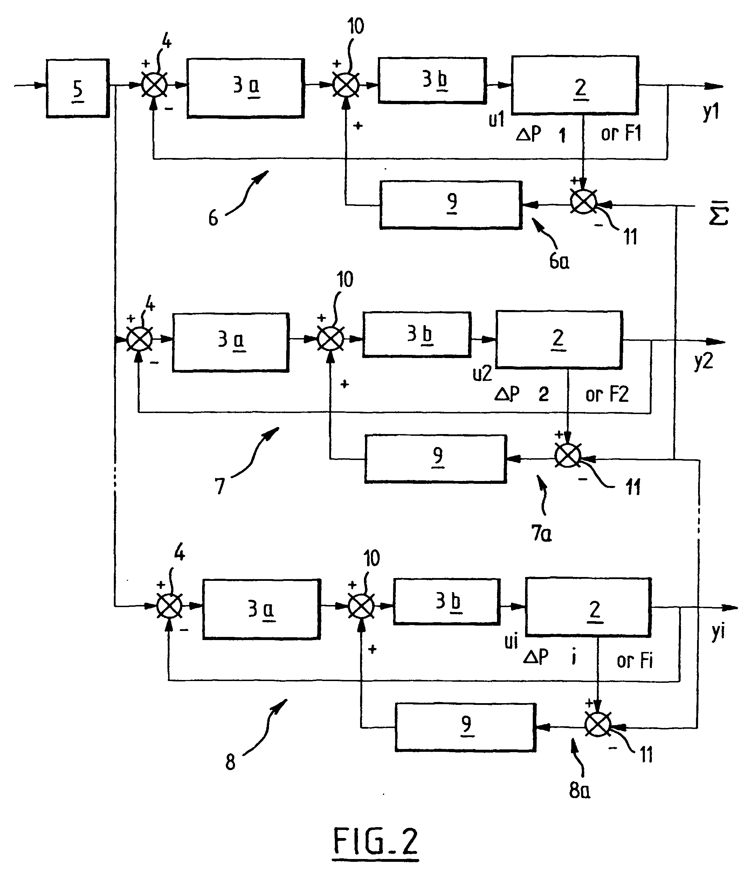

La figure 2 illustre un mode de réalisation dans lequel plusieurs boucles de servocommande du type de celle de la figure 1, et référencées en l'occurrence par 6, 7 et 8, sont montées en parallèle pour assurer une redondance de commande.

Ces trois boucles comportent chacune en amont d'un système servocommandé 2, un module 3a de compensation de position et un module 3b de compensation d'effort.

Un filtre 5 commun aux trois voies transmet aux trois boucles 6 à 8 un même signal filtré de commande C.

Les systèmes servocommandés 2 comportent des moyens pour déterminer un signal correspondant à une estimation de l'effort (force Fi, différence de pression $\Delta Pi$, couple ...) sur les moyens mécaniques actionnés ("yi" désignant le signal caractérisant la position sur la ième boucle).

Ce signal d'estimation d'effort déterminé pour un système servocommandé est moyenné avec les signaux d'estimation d'effort en sortie des autres systèmes servocommandés.

Le signal moyen $\overline{\Sigma}$ obtenu est soustrait (moyens 11) au signal d'estimation d'effort obtenu pour chacune des boucles.

Le signal d'erreur qui en résulte est utilisé pour générer un signal de correction obtenu par traitement par une fonction de transfert 9. Ce signal de correction est sommé (moyens 10) au signal en sortie du module de compensation de position 3a, afin d'obtenir un signal corrigé en entrée du module 3b de compensation d'effort.

Les boucles internes 6a, 7a et 8a ainsi constituées remplacent ainsi avantageusement le système de synchronisation qui sinon devrait être prévu pour permettre le fonctionnement en parallèle des différentes boucles 6, 7, 8.

Ces boucles internes peuvent en variante compléter un système de synchronisation qu'elles déchargent.

## Revendications

1. Dispositif de servocommande de position comportant au moins une boucle d'asservissement (1, 6, 7, 8) et un système servocommandé (2) disposé dans ladite boucle, ladite boucle (1, 6, 7, 8) comportant des moyens de compensation (3) qui comportent des moyens (3a) pour mettre en oeuvre un filtrage à une ou des fréquences de résonance de déplacement pour la une ou les des pièce(s) mécanique(s) commandée(s) en position par le système servocommandé (2), **caractérisé en ce qu'**il comporte des moyens de compensation (3b) qui mettent en oeuvre un filtrage à une ou des fréquences) qui est ou sont une ou des fréquence(s) de résonance pour les efforts exercés sur le système servocommandé 2) et/ou sur la ou les pièce(s) mécanique(s) qu'il commande.

2. Dispositif de servocommande de position selon la revendication 1, comportant plusieurs boucles d'asservissement (6, 7, 8) en parallèle, chaque boucle d'asservissement (6, 7, 8) comprenant un système servocommandé (2) et des moyens de compensation qui comportent des moyens (3a) pour mettre en oeuvre un filtrage à une ou des fréquences de résonance de déplacement pour la (ou les) pièce(s) mécanique(s) commandée(s) en position, chaque boucle comportant également des moyens de compensation 3b qui mettent en oeuvre un filtrage à une ou des fréquence(s) qui est ou sont une ou des fréquences) de résonance pour les efforts exercés sur le système servocommandé (2) et/ou sur la ou les pièce(s) mécanique(s) commandée(s) en position.

3. Dispositif selon la revendication 2, comportant pour chacune des boucles (6, 7, 8) des moyens permettant d'estimer l'effort exercé sur les moyens mécaniques en fonction du signal et il comporte également des moyens pour déduire des différentes estimations d'effort ainsi obtenues une estimation d'effort moyen, ainsi que des moyens (6a, 7a, 8a) qui, pour chacune des boucles (6, 7, 8), corrigent une entrée d'un module de compensation (3b) mettant en oeuvre un filtrage à une ou des fréquences qui est ou sont une ou des fréquence(s) de résonance pour les efforts exercés sur la (ou les) pièce (s) mécanique(s) commandée(s) en position, cette correction étant fonction d'un signal d'erreur caractérisant la différence entre l'estimation d'effort de la boucle et l'estimation d'effort moyen.

4. Dispositif de servocommande de position pour actionneur de commande de vol d'aéronef, constitué par un dispositif selon l'une des revendications précédentes.

5. Dispositif de servocommande de position pour vérin de charge de banc d'essai, constitué par un dispositif selon l'une des revendications 1 à 3.


**Patentansprüche**

1. Vorrichtung zur Positionsservosteuerung, die wenigstens einen Regelkreis (1, 6, 7, 8) und ein servogesteuertes System (2), das sich im Regelkreis befindet, umfaßt, wobei der Regelkreis (1, 6, 7, 8) Kompensationsmittel (3) umfaßt, die Mittel (3a) umfassen, um bei einer oder mehreren Bewegungsresonanzfrequenzen für ein oder mehrere vom servogesteurten System (2) positionsgesteuerte mechanische Teile eine Filterung auszuführen, **dadurch gekennzeichnet, daß** es Kompensationsmittel (3b) umfaßt, die bei einer oder mehreren Frequenzen, die eine oder mehrere Resonanzfrequenzen für die auf das servogesteuerte System (2) und/oder auf das oder die von ihm gesteuerten mechanischen Teile ausgeübten Kräfte sind, eine Filterung ausführen.

2. Vorrichtung zur Positionsservosteuerung nach Anspruch 1, die parallel mehrere Regelkreise (6, 7, 8) umfaßt, wobei jeder Regelkreis (6, 7, 8) folgendes umfaßt: ein servogesteurtes System (2) und Kompensationsmittel, die Mittel (3a) zur Ausführung einer Filterung bei einer oder mehreren Bewegungsresonanzfrequenzen für das oder die positionsgesteuerten mechanischen Teile umfassen, wobei jeder Regelkreis auch Kompensationsmittel (3b) umfaßt, die bei einer oder mehreren Frequenzen, die eine oder mehrere Resonanzfrequenzen für die auf das servogesteuerte System (2) und/oder auf das oder die positionsgesteuerten mechanischen Teile ausgeübten Kräfte sind, eine Filterung ausführen.

3. Vorrichtung nach Anspruch 2, die für jeden der Regelkreise (6, 7, 8) Mittel umfaßt, die es gestatten, die auf die mechanischen Mittel in Abhängigkeit vom Signal ausgeübte Kraft zu schätzen, und die ebenfalls folgendes umfaßt: Mittel, um aus den verschiedenen so erhaltenen Kraftschätzungen eine Schätzung der mittleren Kraft abzuleiten, sowie Mittel (6a, 7a, 8a), die für jeden der Regelkreise (6, 7, 8) ein Eingangssignal eines Kompensationsmoduls (3b) korrigieren, das bei einer oder mehreren Frequenzen, die eine oder mehrere Resonanzfrequenzen für die auf das oder die positionsgesteuerten mechanischen Teile ausgeübten Kräfte sind, eine Filterung ausführt, wobei diese Korrektur von einem Fehlersignal abhängt, das die Differenz zwischen der Kraftschätzung des Regelkreises und der Schätzung der mittleren Kraft kennzeichnet.

4. Vorrichtung zur Positionsservosteuerung für einen Stellantrieb zur Flugsteuerung eines Luftfahrzeugs, die durch eine Vorrichtung nach einem der vorhergehenden Ansprüche gebildet wird.

5. Vorrichtung zur Positionsservosteuerung für einen Lastzylinder eines Prüfstands, die durch eine Vorrichtung nach einem der Ansprüche 1 bis 3 gebildet wird.


**Claims**

1. A position servo-control device comprising at least one servo-control loop (1, 6, 7, 8) and a servo-controlled system (2) placed in said loop, said loop (1, 6, 7, 8) having compensation means (3) which comprise means (3a) for implementing filtering at one or more resonant frequencies of displacement for one or more mechanical parts in controlled position by the servo-controlled system (2), the device being **characterized in that** it includes compensation means (3b) implementing filtering at one or more frequencies which is or are one or more resonant frequencies for the forces exerted on the servo-controlled system (2) and/or on the mechanical part(s) it controls.

2. A position servo-control device according to claim 1, comprising a plurality of servo-control loops (6, 7, 8) in parallel, each servo-control loop (6, 7, 8) comprising a servo-controlled system (2) and compensation means which include means (3a) for filtering at one or more resonant frequencies of displacement for the mechanical part(s) under position control, each loop also including compensation means implementing (3b) filtering at one or more frequencies constituted by one or more resonant frequencies for the forces exerted on the servo-controlled system (2) and/or on the mechanical part(s) under position control.

3. A device according to claim 2, including, for each of the loops (6, 7, 8), means for estimating the force exerted on the mechanical means as a function of the signal, and it also includes means for deducing a mean force estimate from the various force estimates obtained in this way, and means (6a, 7a, 8a) which, for each of the loops (6, 7, 8), correct an input of a compensation module (3b) implementing filtering at one or more frequencies which are one or more resonant frequencies for the forces exerted on the mechanical part(s) under position control, said correction being a function of an error signal characteristic of the difference between the force estimate of the loop and the mean force estimate.

4. A position servo-control device for an aircraft flight control actuator, the device being constituted by a device according to any preceding claim.

5. A position servo-control device for a test bench load actuator, the device being constituted by a device according to any one of claims 1 to 3.

EP 1 168 132 B1

FIG.1

6

FIG.2